# EUROPEAN PATENT APPLICATION

(11) **EP 4 510 594 A1**
(43) Date of publication of application: **19.02.2025**
(21) Application number: 23191870.7
(22) Date of filing: 17.08.2023
(51) Int. Cl.: H04N 21/2343, H04N 21/414, H04N 21/81, H04N 21/8545

(54) **SYSTEM AND METHOD FOR PHOTOREALISTIC 3D CONTENT PRODUCTION**

(71) Applicant: Deutsche Telekom AG, 53113 Bonn (DE)
(72) Inventor: YUN, Harrison Hongseo, 12203 Berlin (DE); ARUNOV, Elmar, 10587 Berlin (DE)
(74) Representative: Vossius & Partner Patentanwälte Rechtsanwälte mbB

(57) **Abstract**

A system for three-dimensional content production, comprising: at least one input smart device comprising a depth sensor , a camera, an inertial measurement unit (11), and a network interface; at least one output smart device comprising at least one display means and a network interface; a network-based processing unit connected to the input smart device and the output smart device via the respective network interface; wherein the input smart device is configured to measure position tracking data, and image data of an object, and point cloud data of the object; wherein the network-based processing unit is configured to: combine the position tracking data and image data to perform texture mapping for the surface of the object; generate a 3D model of the object based on the image data and the point cloud data; perform an object rendering based on the texture mapping and the 3D-model; and provide a video stream to the output smart device; and wherein the output smart device is configured to receive the video stream and display the video stream on at least one of the display means.

## Description

The present disclosure relates to a system and method for three-dimensional, 3D, content production.

The production of 3D content, preferably photorealistic 3D content, has applications, e.g., in video games, movies, virtual reality, and augmented reality. In particular, the realistic modeling of human faces is an important use case, based on the proliferation of digital twins and metaverse services.

Furthermore, said 3D content production technology is expected to play a key role in the growth of the metaverse market in near future. To meet this market demand, many smartphone manufacturers understand the importance of scanning technology and start deploying many advanced sensors such as high-resolution RGB cameras, IR depth sensors, LiDAR sensors, and so on.

Overall, there are two types of 3D object representation technologies, explicit and implicit model technology. Said explicit technology again consists of two different types, direct and indirect model type.

An explicit and indirect model of a 3D object representation is based on capturing multiple RGB images and then producing the 3D contents based on photogrammetry technology. On the other hand, an explicit and direct model of representation is based on capturing depth data directly from depth sensors and to then producing the 3D contents based on that depth information.

Unlike an explicit model, an implicit model may be based on deep learning technologies, which train a neural network to implicitly represent 3D objects. Examples of this implicit model include Neural Radiance Fields, NeRF, and Pixel-aligned Implicit Functions, PIFu.

Each of the implicit and explicit models have distinguishable pros and cons in terms of performance and characteristics and are highly dependent on the power of the computing environment.

For example, the explicit and indirect model requires many high-resolution images as an input source to analyze and takes a longer time to produce the 3D objects than the explicit and direct model. Also, the implicit model requires not only many high-resolution images as an input source but also has a sensitivity depending on the deep learning networks and the quality of training.

On the other hand, the explicit and direct model requires less image input data and consumes less computing power for analysis, but, unfortunately, the depth sensing devices provided in smartphones, from IR sensors to LiDAR sensors, still are underperforming and show many limitations in precision and resolution.

Furthermore, in general in an all-mobile computing environment there is a critical shortage of computing performance. Such a computing environment cannot handle a huge amount of input data, i.e., hundreds of high-resolution image data, nor take a 3D content production pipeline process.

There is 3D human facial modeling software commercially available to the skilled person. A new generation of which is software based on artificial intelligence, AI.

Al-based human facial modeling is a technique that uses machine learning algorithms to generate realistic 3D models of human faces. This technology is used in a variety of applications, including video games, movies, virtual reality, and augmented reality.

Well-known examples of Al-based human facial modeling software is Reallusion's Character Creator 3 or the iPhotoreal Avatar scanner app.

The process of human facial modeling involves training a machine learning model on a large dataset of facial images. The model is configured to learn to recognize patterns in the data and then to use that knowledge to generate new faces that are similar to the one it has seen before.

Popular approaches of AI-based facial modeling use generative adversarial networks, GANs, or 3D morphable face models, 3DMMs.

Al-based facial modeling has the potential to revolutionize the way we create and interact with digital content, making it more realistic and immersive. However, the applicant has realized that typical Al-based facial modeling is not perfect and can have some limitations and potential defects.

The following factors negatively influence the results:
a) Bias: AI models can be biased towards certain groups of people based on the data they were trained on.
b) Uncanny valley: Al-generated faces may look very realistic, but they can still fall into the "uncanny valley" where they look almost human, but not quite.
c) Limited data: AI models require a large amount of training data to perform well, and if the dataset is limited or biased, the model may not be able to generate accurate or diverse faces.

Additionally, the applicant has realized that Al-based facial modeling comes up with scaling and position errors. For example, while the overall appearance of human face is quite similar with the physical human, some critical details such as the height of nose and the position of ears are slightly different than the actual scale and position.

Al-based facial modeling can be used in entertainment or personal use. However, it cannot be used in authentication or identification of a human himself, which are the mandatory requirements in many public services like banking, identification, and governmental administration.

It is thus an object of the present invention to provide an improved system and method of 3D content production, preferably for 3D facial modeling. The invention is set out in the appended set of claims. Any references in the following description to embodiments, objects, aspects and/or examples which are not covered by the appended claims are considered as not being part of the present invention.

According to an aspect of the present invention, there is provided a system for three-dimensional content production, comprising: at least one input smart device comprising a depth sensor, a camera, an inertial measurement unit, and a network interface; at least one output smart device comprising at least one display means and a network interface; a network-based processing unit connected to the input smart device and the output smart device via the respective network interface; wherein the input smart device is configured to measure position tracking data, and image data of an object, and point cloud data of the object; wherein the network-based processing unit is configured to
a) combine the position tracking data and image data to perform texture mapping for the surface of the object;
b) generate a 3D model of the object based on the image data and the point cloud data;
c) perform an object rendering based on the texture mapping and the 3D-model; and
d) provide a video stream to the output smart device; and
wherein the output smart device is configured to receive the video stream and display the video stream on at least one of the display means.

In embodiments of the present invention, the input smart device comprises one or more of: a six degree of freedom tracking module configured to process the measured data from the inertial measurement unit into the position tracking data; an image compression module configured to compress one or more images from the camera into the image data; and a point cloud generation module configured to generate the point cloud data based on one or more images from the camera and/or measured data from the depth sensor.

In embodiments of the present invention, in the network-based processing unit: a 3D model is generated, preferably by an artificial intelligence, based on the image data, wherein the 3D model is a point cloud model; a calibration and/or correction is performed on the point cloud model based on the point cloud data from the input smart device; and the result of the calibration and/or correction is converted into an output mesh model for rendering.

In embodiments of the present invention, in the network-based processing unit: a 3D model is generated, preferably by an artificial intelligence, based on the image data, wherein the 3D model is a first mesh model; the point cloud data from the input device 10 is converted into a second mesh model a calibration and/or correction is performed on the mesh model based on the second mesh model; and the result of the calibration and/or correction an output model for rendering.

In embodiments of the present invention, the calibration and/or correction is based on one or more positional information determined based on a measurement of the input smart device.

In embodiments of the present invention, the object is a human face; wherein the 3D model is a 3D facial model generated by an AI trained for human face generation; wherein the calibration and/or correction is based on one or more of the parameters: length and width of face, height of nose, and position of ears.

In embodiments of the present invention, the input smart device and the output smart device are the same device.

According to an aspect of the present invention, there is provided a method for three-dimensional, 3D, content production in a system according to any one of the preceding aspects and embodiments, comprising of the steps of:
A) at the input smart device, measuring position tracking data, image data of an object, and point cloud data of the object;
B) at the processing unit, combining the position tracking data and image data (7) to perform texture mapping for the surface of the object;
C) at the processing unit, generating a 3D model of the object based on the image data and the point cloud data;
D) at the processing unit, performing an object rendering based on the texture mapping and the 3D-model; and
E) at the processing unit, providing a video stream to the output smart device (50); and
F) at the output smart device, receiving the video stream and displaying the video stream on at least one of the display means.

According to an aspect of the present invention, there is provided a computer program product comprising instructions which, when the program is executed by a smart device, cause the smart device to carry out the steps of the method of the preceding aspect.

According to an aspect of the present invention, there is provided a computer program product comprising instructions which, when the program is executed by a network processing means, cause the network processing means to carry out the steps of the method of the preceding aspect.

According to an aspect of the present invention, there is provided computer-readable medium comprising instructions which, when executed by a smart device or a network processing means, cause the executing device to carry out the method of the preceding aspect.

It is a first core aspect of the present invention to use advanced depth sensors provided in modern smartphones in order to capture the 3D depth data out of a human face and thus the invention can trace the precise scale and position of the human face.

It is a second core aspect of the present invention that Al-based facial modeling can produce a digital copy of human face in form of point clouds or a mesh object. Said digital copy is subsequently calibrated and corrected by the 3D depth-sensor based facial modeling according to the first core aspect.

It is a third core aspect of the present invention that the calibration and correction of the digital copy, i.e., the human facial model, will be done in terms of one or more of length and width measures of a face, height measures of a nose of the face, and position of ears of the face.

### Brief description of the drawings

Embodiments of the present invention will now be described by way of example only and with reference to the following accompanying drawings, in which
- Fig. 1a: shows a front view of an exemplary face defining biometric key parameters;
- Fig. 1b: shows a side view of an exemplary face defining biometric key parameters;
- Fig. 2a: shows a block diagram of a system according to a first embodiment of the present invention;
- Fig. 2b: shows a block diagram of a system according to a second embodiment of the present invention;
- Fig. 3a: shows a block diagram of a smartphone in a system according to the first and second embodiment of the present invention;
- Fig. 3b: shows a block diagram of a cloud-server in a system according to the first embodiment of the present invention;
- Fig. 3c: shows a block diagram of a cloud-server in a system according to the second embodiment of the present invention;
- Fig. 3d: shows a consumer interface smartphone in a system according to the first and second embodiment of the present invention;
- Fig. 4a: shows a data flow diagram of a smartphone in a system according to the first and second embodiment of the present invention;
- Fig. 4b: shows a data flow diagram of a cloud server in a system according to the first embodiment of the present invention;
- Fig. 4c: shows a data flow diagram of a cloud server in a system according to the second embodiment of the present invention;
- Fig. 4d: shows a data flow diagram of a consumer interface in a system according to the first and second embodiment of the present invention; and
- Fig. 5: shows an illustration of the correction and/or calibration according to an embodiment of the present invention.

### Detailed description

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like members throughout the description.

The embodiments of the present invention aggregate an explicit and direct model and an implicit model so that the advantages of both are combined. All input source data captured from the sensors in a smartphone will be uploaded to a cloud computing environment and then analyzed and processed to produce the 3D contents.

Embodiments of the present invention employ six sub-processes;
(1) data sensing and capturing in a mobile device,
(2) data uploading to a cloud computing environment,
(3) individual processes based on an explicit and direct model and an implicit model,
(4) aggregation of point cloud data, i.e., shape and texture, produced from both models,
(5) creation of polygon mesh and UV texture projection,
(6) 3D object rendering and capturing on a cloud computing environment, and
(7) video streaming to the mobile device for the final consumption.

Especially, the aggregation of point cloud data can be a linear combination of shape and texture data that are produced from either an explicit model or an implicit model.

The weight parameter in this linear combination can be defined in a manual operation or by minimization of a difference measure between the output 3D object and the input image sources.

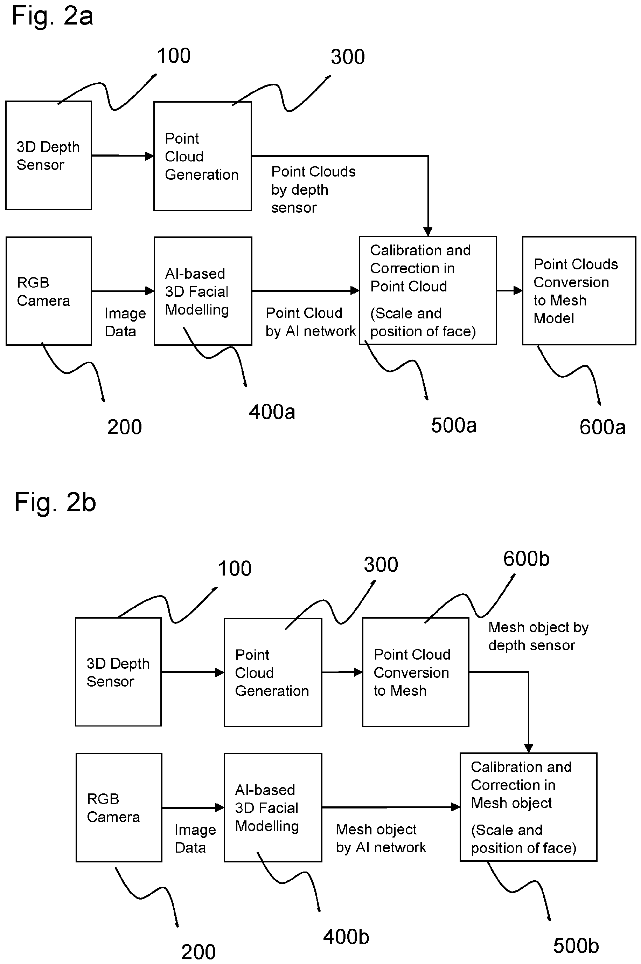

Fig. 2a shows a block diagram of a system according to a first embodiment of the present invention. Fig. 2b shows a block diagram of a system according to a second embodiment of the present invention. The difference between the two embodiments is the order of point cloud generation, calibration and/or correction, and point cloud to mesh conversion, as will be detailed below.

Modern smartphones are typically equipped with advanced depth sensors able to capture the 3D depth data out of human faces and can trace the precise scale and position of human face.

In this description the term smartphone encompasses all mobile computing devices comprising at least: one or more network communication interfaces, a display device, processing means, memory means, and different types of sensors. Wherein the sensors comprise one or more of: a RGB camera, a depth sensor, a IMU sensor, and a geolocation sensor. Also the term smart device will be used to describe the aforementioned mobile computing device.

Al-based facial modeling may produce a digital copy of human face in form of point clouds or a mesh object. The digital copy may then be calibrated and corrected by the 3D depth-sensor based facial modeling.

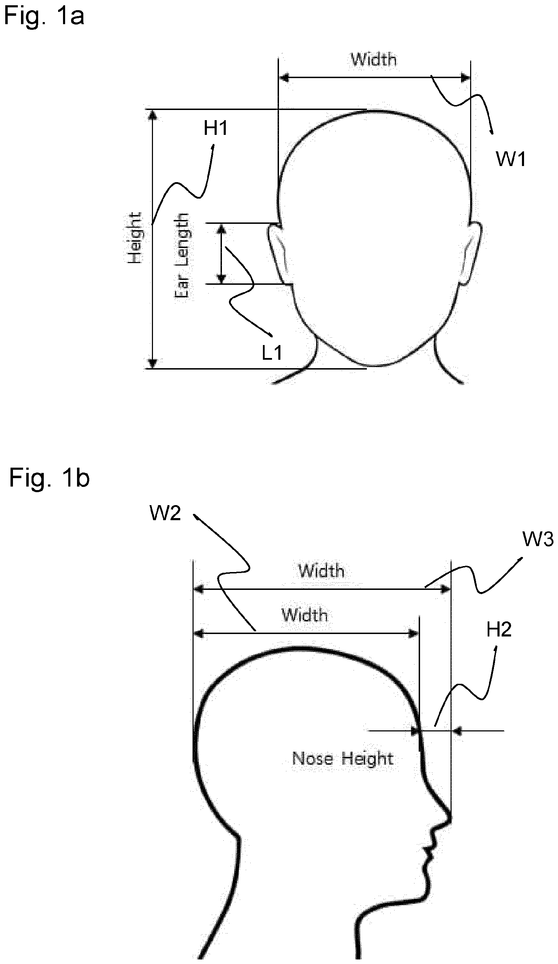

The calibration and correction of the human facial model may be done in terms of one or more of the parameters shown in Fig. 1a and Fig. 1b, i.e.: height H1 and widths W1, W2, or W3 of face, height H2 or length L1 of nose, position of ears.

In this description, the term point cloud refers to a set of data points in a three-dimensional space. The set of data points represent the shape of an object. Point clouds are generated by a plurality of measurements of an external surface of the object with a 3D sensor or by photogrammetry software.

In this description the term mesh refers a collection of vertices, edges and faces defining a shape of an object in a in a three-dimensional space. Different types of meshes are known to the skilled person, polygon meshes and triangular meshes are commonly used.

According to an aspect of the invention an artificial intelligence of a 3D facial modelling step is configured to output a mesh based on input RGB camera data.

In the embodiment of Fig. 2a, a 3D depth sensor 100 is configured to perform a plurality of measurements provided to perform a point cloud generation 300 for an object. A camera, preferably RGB Camera 200, is configured to obtain image data and further configured to input the image data to a first AI network 400a. The first AI network 400a performs Al-based 3D facial modelling and is configured to output a point cloud of an object contained in the image data.

In the first embodiment, one or more of the point clouds 300 generated based on the 3D depth sensor measurements are used to calibrate and/or correct 500a the one or more point clouds 400a generated by the AI network based on the image data.

Subsequently, the corrected point clouds are then converted 600a into a mesh model of the object.

The object is preferably a human face. The calibration and/or correction may be done in terms of one or more of the parameters shown in Fig. 1a and Fig. 1b, e.g.: height and width of face, height and length of nose, position of ears. As an example, one or many parameters may be compared with the Al-based mesh object and the object may be sculptured so that it can align with one or many parameters. The calibration and/or correction will preferably correct the shape of human face and the location of organs, i.e., facial features.

In the embodiment of Fig. 2b a 3D depth sensor 100 is configured to perform a plurality of measurements provided to perform a point cloud generation 300 for an object. A camera, preferably a RGB Camera 200, is configured to obtain image data and further configured to input the image data to a second AI network 400b. The second AI network 400b performs Al-based 3D facial modelling and is configured to output a mesh of an object contained in the image data.

The point clouds generated based on the depth sensor measurements are then converted into a mesh 600b.

In the second embodiment, the mesh generated by the second AI network 400b is then calibrated and/or corrected 500b based on the mesh obtained from the conversion 600b of the point cloud 300 generated based on the measurements of the depth sensor 100.

The object is preferably a human face. The calibration and/or correction may be done in terms of one or more of the parameters shown in Fig. 1a and Fig. 1b, e.g.: height and width of face, height and length of nose, position of ears.

In general, point clouds are raw data while a mesh object is a processed data which consists of vertices, edges, and faces. As mentioned, according to the invention the calibration and/or correction may be applied on either format, a correction based on mesh objects (from AI network and depth sensor) would be preferrable, since it can save computing power.

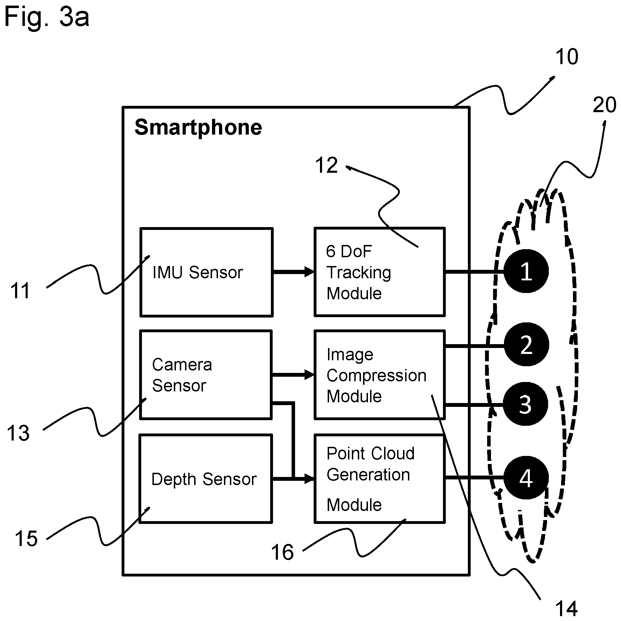

Fig. 3a shows a block diagram of a smartphone in a system according to the first and second embodiment of the present invention. As defined above, the embodiments of a smartphone are not limited to an actual phone but to a class of mobile computing devices with one or more sensors and at least one network communication interface.

In the embodiments of the present invention, a smartphone 10 comprises an inertial measurement unit, IMU, sensor 11 operationally coupled to a six degree of freedom, 6 DoF, tracking module 12; a camera sensor 13, preferably with an RBG and/or IR image sensor, operationally coupled to an image compression module 14 and/or to a point cloud generation module 16; and a depth sensor 15 operationally coupled to the point cloud generation module 16.

The smartphone 10 is configured to upload the processed sensor data, i.e., the output of the 6 DoF tracking module 12, the image compression module 14, and the point cloud generation module 16 to a cloud 20.

The black-filled circles 1, 2, 3, and 4 in the cloud 20 illustrate data instances uploaded. The term cloud refers to any instance of a remote computing environment, i.e., either a centralized server or a decentralized computing environment. The term upload refers to any data transfer method realized based on one or more of the network communications interfaces of the smartphone 10.

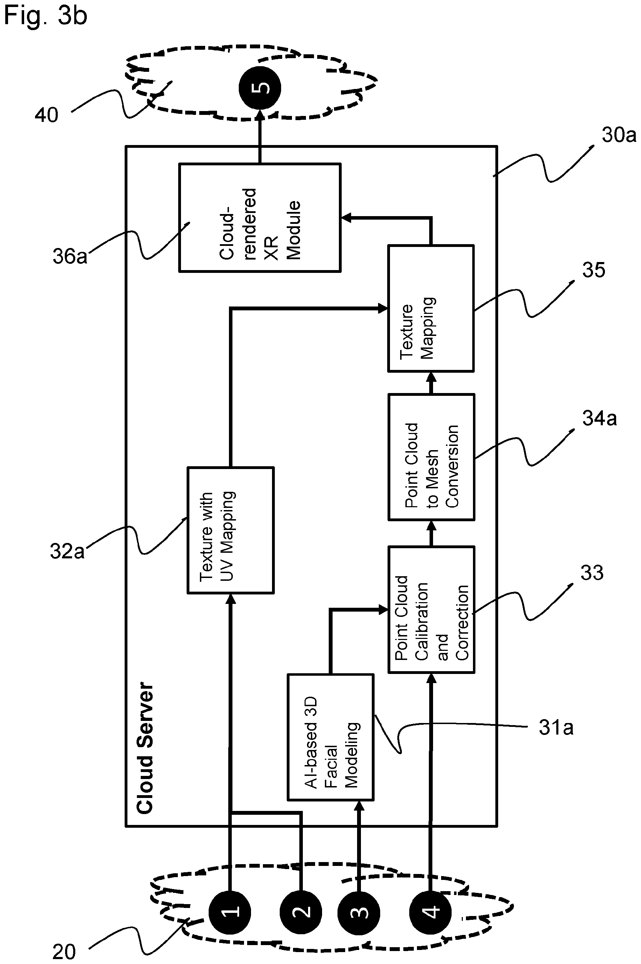

Fig. 3b shows a block diagram of a cloud-server in a system according to the first embodiment of the present invention. As detailed above, the cloud-server 30a may be a centralized computing entity or a decentralized computing entity. The cloud server 30a comprises an AI based 3D facial modelling unit 31a configured to receive an input 3 from the image compression module 14 and output a point cloud to a calibration and/or correction unit 33.

The calibration and/or correction unit 33 is configured to receive point clouds as input, specifically, an input 4 from the point cloud generation module 16 and an input from the AI based 3D facial modelling unit 31a. The calibration and/or correction unit 33 is configured to output a calibrated point cloud to a mesh conversion unit 34a.

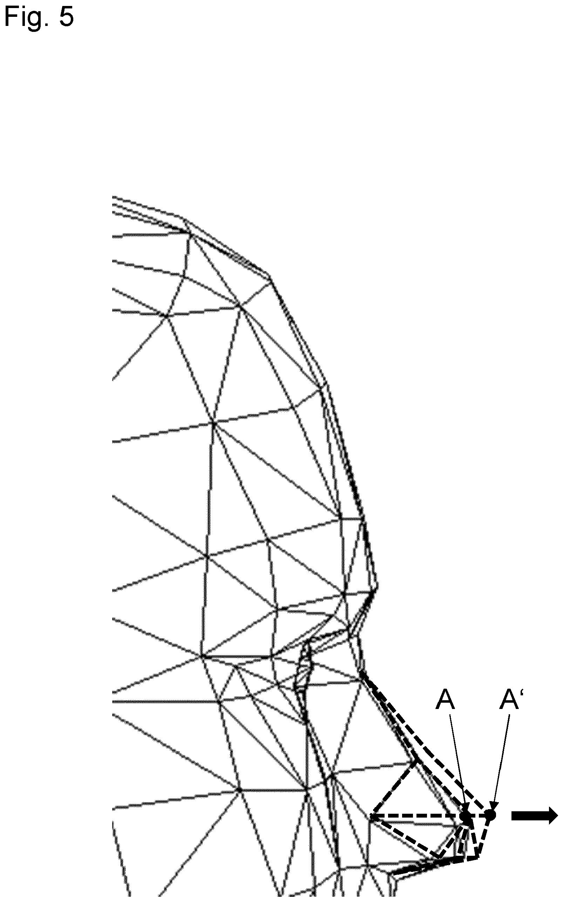

Fig. 5 shows an illustration of the correction and/or calibration according to an embodiment of the present invention. The correction and/or calibration of the object is based on a sculpting process. That is a, specific point A, e.g., the position of the nose, is moved to a predetermined position A'. The aforementioned points to apply sculpting can be point clouds or vertices in mesh.

The cloud server 30a further comprises a texture unit 32a, configured to receive an input from the 6 DoF tracking module 12 and the image compression module 14 and to perform UV-Mapping based on said input. That is, the texture unit 32a is configured to perform a 3D modeling process of projecting a 3D model's surface to a 2D image for texture mapping.

The point cloud to mesh conversion unit 34a is configured to convert the corrected point cloud into a mesh and is operationally coupled to a texture mapping unit 35.

The texture mapping unit 35 is configured to receive and combine an input from the texture data from texture unit 32a and the mesh object from point cloud to mesh conversion unit 34a and then produce the photorealistic 3D objects. The processed 3D objects are transferred to the unit 36a, Cloud-rendered XR module, to be distributed to the target devices.

The Cloud-rendered XR module 36a is configured to stream the photorealistic 3D object contents to an end user after rendering them on the cloud environment equipped with powerful GPU resources. It is noted that the cloud, 40, represents a cloud network.

A cloud network is defined as mobile, wireless, and/or broadband networks, e.g., 5G mobile, WiFi, Optical networks, etc. Unit 40 is configured to stream the 3D object contents to the end users or target devices.

That is, the cloud 20 and the cloud 40 may be the same cloud network. A user device is connected to said cloud network and uploads input data. In the network the processing according to the present invention is performed and the output is then streamed to the end user and/or target device via a cloud network again, preferably via the same cloud network.

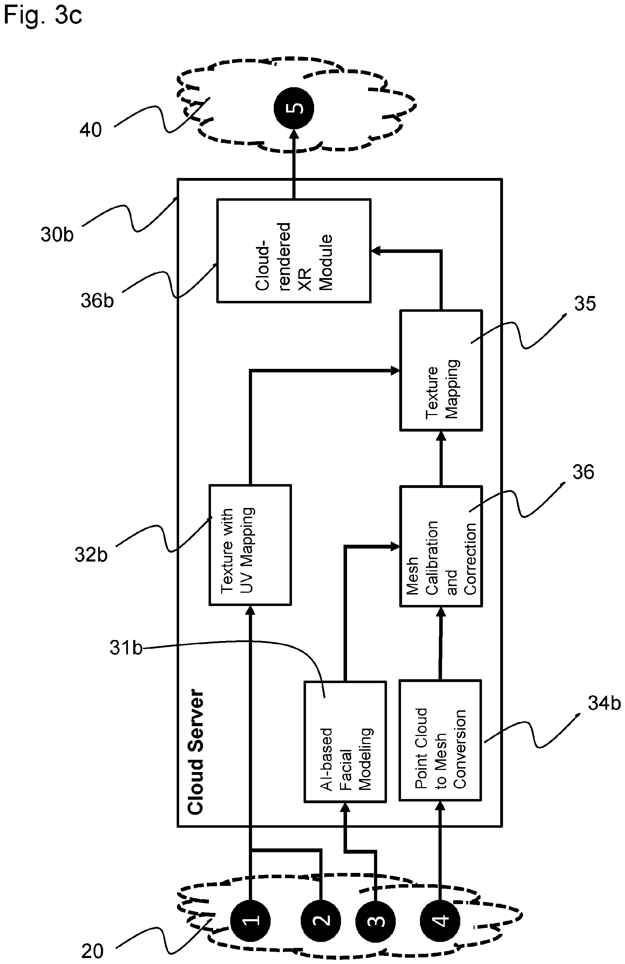

Fig. 3c shows a block diagram of a cloud-server in a system according to the second embodiment of the present invention. As detailed above, the cloud-server 30b may be a centralized computing entity or a decentralized computing entity.

The cloud server 30b comprises an AI based 3D facial modelling unit 31b configured to receive an input 3 from the image compression module 14 and output a mesh to a mesh calibration and/or correction unit 36.

The mesh calibration and/or correction unit 36 is configured to receive meshes as input, specifically, an input from a point cloud to mesh conversion unit 34b configured to convert the input 4 from the point cloud generation module 16 and an input from the AI based 3D facial modelling unit 31b.

The mesh calibration and/or correction unit 36 is configured to output a calibrated mesh to a texture mapping unit 35. In detail, the same the calibration and/or correction unit may be used as discussed for the embodiment shown in Fig. 5.

The cloud server 30a further comprises a texture unit 32b, configured to receive an input from the 6 DoF tracking module 12 and the image compression module 14 and to perform UV-Mapping based on said input.

The texture mapping unit 35 is configured to receive and combine an input from the texture unit 32b, and the mesh calibration and/or correction unit 36 and is operationally coupled to a Cloud-rendered XR module 36b.

As detailed above, the texture mapping unit 35 is configured generate the final photorealistic 3D object contents. In general, said content comprises a high number of polygons and high resolution images, i.e., textures. Therefore, in general, they cannot be properly rendered directly on a local device such as smartphone, VR glasses, AR glasses, and a browser. However, the cloud-rendered XR module 36a, 36b according to the present invention is configured render them and convert them into a standard video data and then stream or more generally distributed the video data to the target device.

The mixed reality, i.e. Cloud-rendered XR, module 36a in configured to generate 3D content and to output the content to an end user 50, preferably via an output 5 from the cloud 40. The processed 3D objects are transferred to the unit 36b, Cloud-rendered XR module, to be distributed to the target devices.

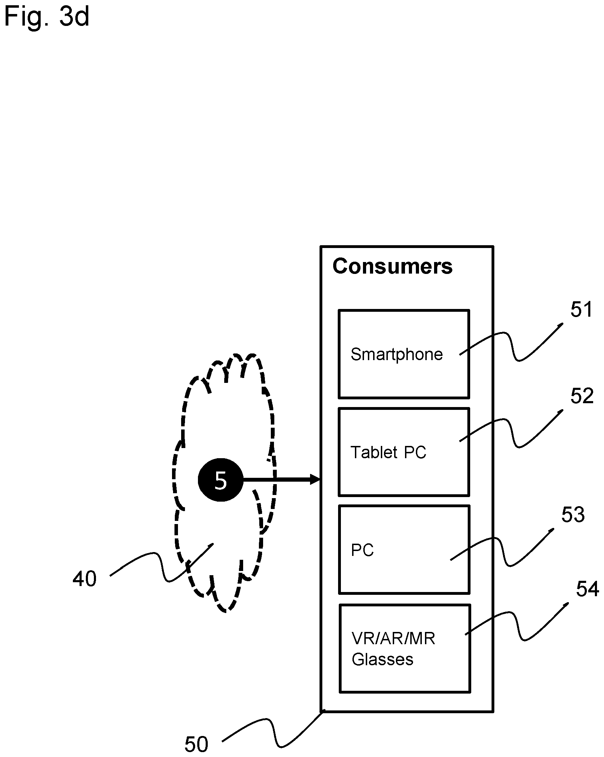

Fig. 3d shows a consumer interface smartphone in a system according to the first and second embodiment of the present invention.

The 3D content 5 is provided by the cloud connection 40 from the cloud server to a consumer 50. In detail, the content may be provided from the cloud 40 to one or more devices. Said devices may comprise a smartphone 51, which may be the same smartphone as the input generating smartphone 10 or a different device, a tablet PC 52, a PC 53, or a VR/AR/MR glasses device 54.

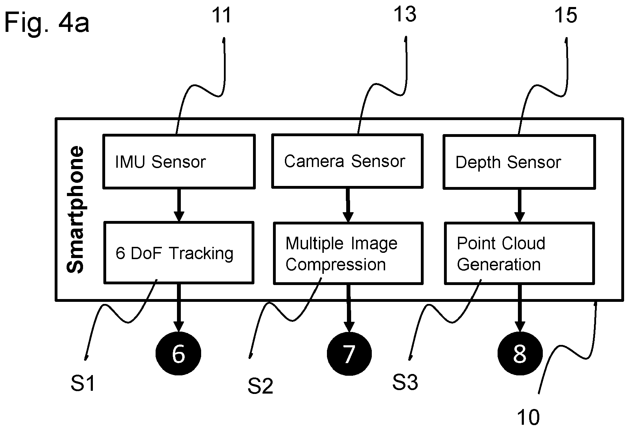

Figs. 4a to 4d shows data flow diagrams in a system according to the first and second embodiment of the present invention corresponding to the respective Figs. 3a to 3d.

In the smartphone 10, the image data is generated by a camera sensor 13 and the image data is then compressed in multiple image compression step S2 forming input 7. Furthermore, positioning data is generated by the IMU sensor 11 and 6 DoF tracking is performed in step S1 forming input 6. Still further 3D data is measured by the depth sensor 15 and a point cloud is generated in step S3 forming input 8.

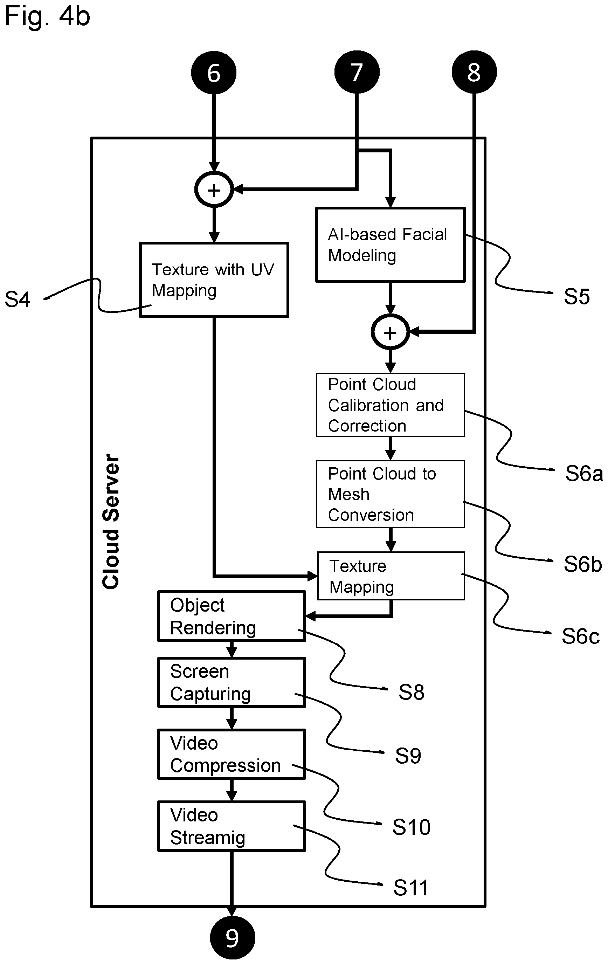

In the first embodiment, as illustrated in Fig. 4b, inputs 6 and 7 are combined to form an input for the UV mapping in step S4. Furthermore, a point cloud is generated based on the image data of input 7 in step S5.

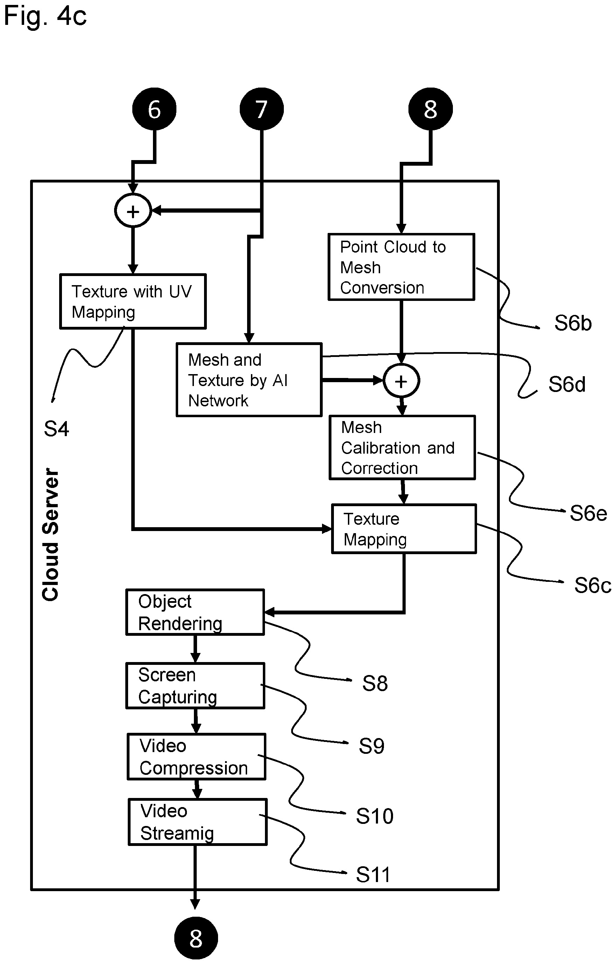

It is noted that the "+" process in the drawings, and as "combine" in this description, represents the aggregation of a data set fed from two different resources. For example, in order to perform UV mapping on the texture, 6DoF tracking data and image data are required to be collected together in Fig. 4c.

The point clouds from step S5 and S3 are combined. Then, a point cloud calibration and/or correction is performed in step S6a. The output point cloud is converted into a mesh and inputted together with the output of step S4 to a texture mapping process S6c.

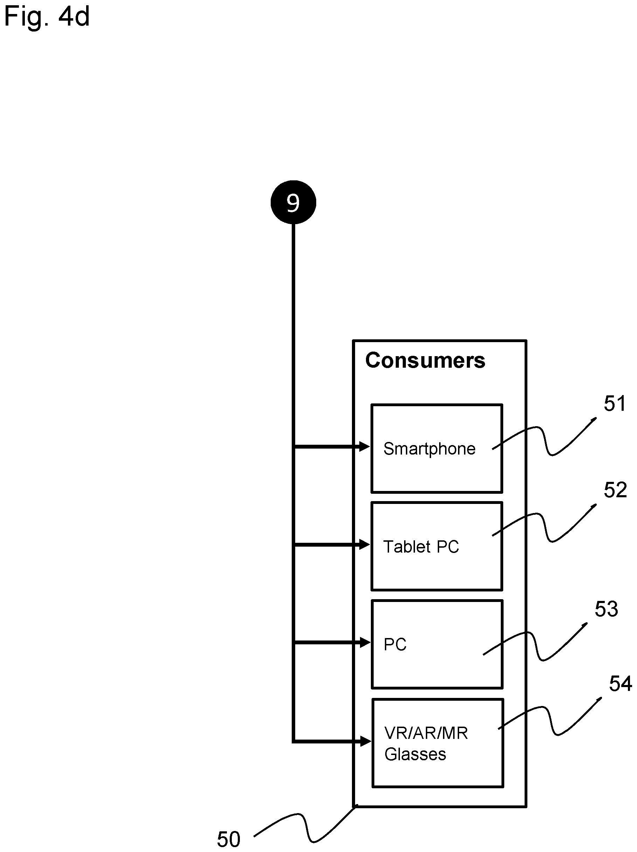

Subsequently the object is rendered S8, a screen is captured S9, a plurality of screen captures is compressed into a video S10, and the video is streamed S11 forming an output 9 to the consumer 50 as discussed for Fig. 3d, see here Fig. 4d.

In the second embodiment, as illustrated in Fig. 4c, inputs 6 and 7 are combined to form an input for the UV mapping in step S4. Furthermore, a mesh is generated based on the image data of input 7 in step S6d.

The point clouds from step S3 are converted into a mesh in step S6b. The converted mesh and the mesh based on the AI network from step S6d are combined and both meshes are calibrated and/or corrected in step S6e.

The output mesh from the aggregation is inputted together with the combined output of steps S4 and S6d to a texture mapping process S6c.

Subsequently the object is rendered S8, a screen is captured S9, a plurality of screen captures is compressed into a video S10, and the video is streamed S11 forming an output 9 to the consumer 50 as discussed for Fig. 3d.

Various modifications to the embodiments described are possible and will occur to those skilled in the art without departing from the invention which is defined by the following claims.

## Claims

1. A system for three-dimensional, 3D, content production, comprising:
at least one input smart device (10) comprising a depth sensor (15), a camera (12), an inertial measurement unit (11), and a network interface;
at least one output smart device (50) comprising at least one display means and a network interface;
a network-based processing unit (30a, 30b) connected to the input smart device (10) and the output smart device (50) via the respective network interface;
wherein the input smart device (10) is configured to measure position tracking data (6), and image data (7) of an object, and point cloud data (8) of the object;
wherein the network-based processing unit is configured to
a) combine the position tracking data (6) and image data (7) to perform texture mapping for the surface of the object;
b) generate a 3D model of the object based on the image data (7) and the point cloud data (8);
c) perform an object rendering based on the texture mapping and the 3D-model; and
d) provide a video stream (9) to the output smart device (50); and
wherein the output smart device (50) is configured to receive the video stream (9) and display the video stream (9) on at least one of the display means.

2. System according to claim 1, wherein the input smart device (10) comprises one or more of:
a six degree of freedom tracking module (12) configured to process the measured data from the inertial measurement unit (11) into the position tracking data (6);
an image compression module (14) configured to compress one or more images from the camera into the image data (7); and
a point cloud generation module (16) configured to generate the point cloud data (8) based on one or more images from the camera (13) and/or measured data from the depth sensor (15).

3. System according to claim 1 or 2, wherein in the network-based processing unit:
a 3D model is generated, preferably by an artificial intelligence, based on the image data, wherein the 3D model is a point cloud model;
a calibration and/or correction is performed on the point cloud model based on the point cloud data (8) from the input smart device (10); and
the result of the calibration and/or correction is converted into an output mesh model for rendering.

4. System according to claim 1 or 2, wherein in the network-based processing unit:
a 3D model is generated, preferably by an artificial intelligence, based on the image data, wherein the 3D model is a first mesh model;
the point cloud data (8) from the input device 10 is converted into a second mesh model
a calibration and/or correction is performed on the mesh model based on the second mesh model; and
the result of the calibration and/or correction an output model for rendering.

5. System according to any one of claims 1 to 4, wherein the calibration and/or correction is based on one or more positional information determined based on a measurement of the input smart device.

6. System according to any one of claims 1 to 5,
wherein the object is a human face;
wherein the 3D model is a 3D facial model generated by an artificial intelligence, AI, trained for human face generation;
wherein the calibration and/or correction is based on one or more of the parameters: length and width of face, height of nose, and position of ears.

7. System according to any one of claims 1 to 6, wherein the input smart device (10) and the output smart device (50) are the same device.

8. Method for three-dimensional, 3D, content production in a system according to any one of claims 1 to 7, comprising of the steps of:
A) at the input smart device (10), measuring: position tracking data (6), image data (7) of an object, and point cloud data (8) of the object;
B) at the processing unit, combining the position tracking data (6) and image data (7) to perform texture mapping for the surface of the object;
C) at the processing unit, generating a 3D model of the object based on the image data (7) and the point cloud data (8);
D) at the processing unit, performing an object rendering based on the texture mapping and the 3D-model; and
E) at the processing unit, providing a video stream (9) to the output smart device (50); and
F) at the output smart device, receiving the video stream (9) and displaying the video stream on at least one of the display means.

9. A computer program product comprising instructions which, when the program is executed by a smart device, cause the smart device to carry out the steps of the method of claim 8.

10. A computer program product comprising instructions which, when the program is executed by a network processing means, cause the network processing means to carry out the steps of the method of claim 8.

11. A computer-readable medium comprising instructions which, when executed by a smart device or a network processing means, cause the executing device to carry out the method of claim 8.

## Amended claims

### Amended claims in accordance with Rule 137(2) EPC.

1. A system for three-dimensional, 3D, content production, comprising:
at least one input mobile computing device (10) comprising a depth sensor (15), a camera (12), an inertial measurement unit (11), and a network interface;
at least one output mobile computing device (50) comprising at least one display means and a network interface;
a network-based processing unit (30a, 30b) connected to the input mobile computing device (10) and the output mobile computing device (50) via the respective network interface;
wherein the input mobile computing device (10) is configured to measure position tracking data (6), and image data (7) of an object, and point cloud data (8) of the object; and
wherein the input mobile computing device (10) comprises a six degree of freedom tracking module (12) configured to process the measured data from the inertial measurement unit (11) into the position tracking data (6);
wherein the network-based processing unit is configured to
a) combine the position tracking data (6) and image data (7) to perform texture mapping for the surface of the object;
b) generate a 3D model of the object based on the image data (7) and the point cloud data (8);
c) perform an object rendering based on the texture mapping and the 3D-model; and
d) provide a video stream (9) to the output mobile computing device (50); and
wherein the output mobile computing device (50) is configured to receive the video stream (9) and display the video stream (9) on at least one of the display means; and
wherein in the network-based processing unit: a 3D model is generated based on the image data, wherein the 3D model is a point cloud model; and a calibration and/or correction is performed on the point cloud model based on the point cloud data (8) from the input mobile computing device (10); or
wherein in the network-based processing unit: a 3D model is generated based on the image data, wherein the 3D model is a first mesh model; the point cloud data (8) from the input device (10) is converted into a second mesh model; and a calibration and/or correction is performed on the mesh model based on the second mesh model; and
wherein the result of the calibration and/or correction is converted into an output mesh model for rendering.

2. System according to claim 1, wherein the input mobile computing device (10) comprises one or more of:
an image compression module (14) configured to compress one or more images from the camera into the image data (7); and
a point cloud generation module (16) configured to generate the point cloud data (8) based on one or more images from the camera (13) and/or measured data from the depth sensor (15).

3. System according to claim 1 or 2, wherein the calibration and/or correction is based on one or more positional information determined based on a measurement of the input mobile computing device.

4. System according to any one of claims 1 to 3,
wherein the object is a human face;
wherein the 3D model is a 3D facial model generated by an artificial intelligence, Al, trained for human face generation;
wherein the calibration and/or correction is based on one or more of the parameters: length and width of face, height of nose, and position of ears.

5. System according to any one of claims 1 to 4, wherein the input mobile computing device (10) and the output mobile computing device (50) are the same device.

6. Method for three-dimensional, 3D, content production in a system according to any one of claims 1 to 5, comprising of the steps of:
A) at the input mobile computing device (10), measuring: position tracking data (6), image data (7) of an object, and point cloud data (8) of the object;
B) at the processing unit, combining the position tracking data (6) and image data (7) to perform texture mapping for the surface of the object;
C) at the processing unit, generating a 3D model of the object based on the image data (7) and the point cloud data (8);
D) at the processing unit, performing an object rendering based on the texture mapping and the 3D-model; and
E) at the processing unit, providing a video stream (9) to the output mobile computing device (50); and
F) at the output mobile computing device, receiving the video stream (9) and displaying the video stream on at least one of the display means; and
wherein in the network-based processing unit: a 3D model is generated based on the image data, wherein the 3D model is a point cloud model; and a calibration and/or correction is performed on the point cloud model based on the point cloud data (8) from the input mobile computing device (10); or
wherein in the network-based processing unit: a 3D model is generated based on the image data, wherein the 3D model is a first mesh model; the point cloud data (8) from the input device (10) is converted into a second mesh model; and a calibration and/or correction is performed on the mesh model based on the second mesh model; and
wherein the result of the calibration and/or correction is converted into an output mesh model for rendering.

7. A computer program product comprising instructions which, when the program is executed by a mobile computing device, cause the mobile computing device to carry out the steps of the method of claim 6.

8. A computer program product comprising instructions which, when the program is executed by a network processing means, cause the network processing means to carry out the steps of the method of claim 6.

9. A computer-readable medium comprising instructions which, when executed by a mobile computing device or a network processing means, cause the executing device to carry out the method of claim 6.
